# EUROPÄISCHE PATENTSCHRIFT

(11) **EP 2 177 988 B1**
(45) Veröffentlichungstag und Bekanntmachung des Hinweises auf die Patenterteilung: **21.06.2017**
(21) Anmeldenummer: 09012915.6
(22) Anmeldetag: 13.10.2009
(51) Int. Cl.: G06F 9/46

(54) **VERFAHREN UND VORRICHTUNG ZUR VERWALTUNG EINES DATENSPEICHERS**
METHOD AND DEVICE FOR MANAGING A DATA STORAGE
PROCÉDÉ ET DISPOSITIF DESTINÉS À LA GESTION D'UNE MÉMOIRE

(30) Priorität: 14.10.2008 DE 102008051575
(43) Veröffentlichungstag der Anmeldung: 21.04.2010
(73) Patentinhaber: Giesecke & Devrient GmbH, 81677 München (DE)
(72) Erfinder: Kramposthuber, Georg, 80639 München (DE)

(56) Entgegenhaltungen:
- WO-A1-2007/078891
- US-A1- 2004 064 635
- US-A1- 2006 036 655
- DIDIER DONSEZ ET AL: "Recoverable Persistent Memory for SmartCard" 1. Januar 2006 (2006-01-01), SMART CARD. RESEARCH AND APPLICATIONS LECTURE NOTES IN COMPUTER SCIENCE;;LNCS, SPRINGER, BERLIN, DE, PAGE(S) 134 - 140 , XP019048890 ISBN: 9783540679233 * Seite 135, Zeile 11 - Zeile 33 * * Seite 136, Zeile 27 - Zeile 33 * * Seite 138, Zeile 1 - Zeile 29 * * Seite 139, Zeile 7 - Zeile 15 *
- OESTREICHER M: "Transactions in Java Card" COMPUTER SECURITY APPLICATIONS CONFERENCE, 1999. (ACSAC '99). PROCEEDI NGS. 15TH ANNUAL PHOENIX, AZ, USA 6-10 DEC. 1999, LOS ALAMITOS, CA, USA,IEEE COMPUT. SOC, US, 6. Dezember 1999 (1999-12-06), Seiten 291-298, XP010368606 ISBN: 978-0-7695-0346-2

## Beschreibung

Die Erfindung betrifft allgemein das Gebiet der Verwaltung eines Datenspeichers in einem tragbaren Datenträger. Ein tragbarer Datenträger im Sinne der vorliegenden Beschreibung kann insbesondere eine Chipkarte (Smartcard) in diversen Bauformen oder ein Chipmodul oder ein sonstiges ressourcenbeschränktes System sein. Genauer betrifft die Erfindung ein Verfahren zur Verarbeitung von mehreren Transaktionen, insbesondere von asynchronen, verschachtelten Transaktionen und/oder Transaktionen aus nebenläufig ausgeführten Prozessen, in einem tragbaren Datenträger. Darüber hinaus betrifft die Erfindung einen tragbaren Datenträger mit einem Prozessor und mindestens einem Speicher.

Ressourcenbeschränkte, kompakte Systeme, wie sie beispielsweise in tragbaren Datenträgern eingesetzt werden, sollen einerseits eine hohe Leistungsfähigkeit bei geringen Kosten und Abmessungen aufweisen und andererseits einen sicheren Betrieb auch bei ungünstigen Umgebungsbedingungen gewährleisten. Insbesondere werden hohe Anforderungen an die Sicherheit und Zuverlässigkeit der Hardware, des Betriebssystems und der ausgeführten Anwendungsprogramme (Applikationen oder Prozesse) gestellt. So müssen z.B. Zugriffskonflikte und Inkonsistenzen, die auftreten können, wenn mehrere Prozesse unabhängig voneinander auf ein gemeinsam genutztes Dateisystem zugreifen, sicher vermieden werden. Es muss insbesondere dafür gesorgt werden, dass Änderungen im Dateisystem immer atomar, d.h. entweder ganz oder gar nicht, erfolgen.

Bei manchen tragbaren Datenträgern ist der Datenspeicher durch ein Byteweises beschreibbares EEPROM gebildet. Beim Ausführen einer atomaren Schreiboperation während einer Transaktion wird zunächst der ursprüngliche Inhalt der zu überschreibenden Speicherwörter in einem Schattenspeicher oder Rückführpuffer gesichert. Die Speicherwörter des EEPROM-Datenspeichers werden dann Byteweise beschrieben. Falls dieser Schreibvorgang nicht erfolgreich abgeschlossen werden kann, z.B. wegen einer plötzlichen Unterbrechung der Stromversorgung, so werden beim nächsten Hochfahren des Datenträgers die Informationen in dem Rückführpuffer verwendet, um den ursprünglichen Zustand des Datenspeichers wieder herzustellen. Bei einem erfolgreichen Abschluss der Transaktion werden die Informationen im Rückführpuffer gelöscht.

Aus dem Stand der Technik sind verschiedene Verfahren zum Absichern von Daten eines Datenspeichers sowie zur Absicherung von Transaktionen bekannt.

Die DE 10 2004 019 683 A1 stellt einen Mechanismus zum Verwalten eines Dateisystems in einem tragbaren Datenträger bereit, bei dem in dem Dateisystem für zumindest manche Strukturen prozessspezifische Sichtbarkeitsinformationen verwaltet werden. Diese bewirken, dass ein Vorgang, bei dem ein Prozess eine Struktur im Dateisystem erzeugt oder aus diesem löscht, für die anderen Prozesse zumindest bis zum erfolgreichen Abschluss dieses Vorgangs verborgen bleibt. Für andere Prozesse wird z.B. eine neu angelegte Datei erst dann sichtbar, wenn der vollständige Vorgang des Anlegens der Datei erfolgreich abgeschlossen worden ist und keine Möglichkeit eines Abbruchs oder Fehlschlags dieses Vorgangs mehr besteht. Hierdurch werden Zugriffskonflikte vermieden.

Die DE 10 2004 005 290 B3 schlägt ein Verfahren und eine Vorrichtung zur Absicherung von Daten in einem nicht-flüchtigen und in Speichersegmente unterteilten Datenspeicher vor, bei dem für ein Speichersegment neben einem Status ein weiteres Datenelement vorgesehen wird. Das weitere Datenelement ermöglicht für den Fall, dass ein Löschen des Speichersegments nicht vollständig ausgeführt wurde, die Bestimmung des Altersranges der Daten in dem nicht vollständig gelöschten Speichersegment gegenüber Daten in einem zweiten Speichersegment. Hierdurch wird die Absicherung eines atomaren Schreibvorganges verbessert.

Aus der DE 10141926 A1 ist ein Verfahren zur Verwaltung eines Datenspeichers bekannt, bei dem bei einem nicht-atomaren Schreibvorgang während einer Transaktion nicht nur der Inhalt des Datenspeichers, sondern gegebenenfalls auch der Inhalt eines Puffers geändert wird. Bei einem nicht-atomaren Schreibzugriff auf eine Seite, deren Speicherabbild bereits im Rückführpuffer vorliegt, wird ein modifiziertes Speicherabbild erstellt, das sich aus dem bereits vorliegenden Speicherabbild durch Ausführen der nicht-atomaren Schreiboperation ergibt. Auf diese Weise bleiben Auswirkungen erfolgreich abgeschlossener nicht-atomarer Schreiboperationen auch dann erhalten, wenn die Transaktion wegen eines Fehlers oder durch ein entsprechendes Kommando abgebrochen wird und ein Rückführvorgang hinsichtlich der atomaren Schreiboperationen erfolgt. Es ist somit vorgesehen, bei einer nicht-atomaren Schreiboperation ein modifiziertes Speicherabbild zu erstellen.

Um die Anzahl von Rückführspeicherungen bei der Abarbeitung von Transaktionen effizient durchführen zu können, schlägt die US 7,168,612 B2 vor, für jede Transaktion die Ergebnisse der Ausführung einer Instruktion zu speichern, sowie zu bestimmen, ob eine Veränderung eines erkennbaren Zustands aufgetreten ist und in dem Fall, in dem eine Veränderung aufgetreten ist, einen Bereich der gespeicherten Daten in einen nicht-flüchtigen Speicher rückzuführen.

Ferner schlägt die US 6,535,997 B1 vor, für eine Transaktion ein Fehlerkorrekturschema zu verwenden, in welchem ein Datenintegritätsschema implementiert ist. Dieses umfasst die Schritte: Initiieren einer atomaren Transaktion, um einen existenten Datensatz zu modifizieren; Verarbeiten der atomaren Transaktion; Überwachen, ob die atomare Transaktion erfolgreich beendet wurde; Bereitstellen eines fehler-existenten Wiederherstellungsschemas, insbesondere eines fehlerresistenten Datensatzindextauschschemas und Verwendung eines LRC Fehlerkorrekturschemas.

Bei einer neuen Generation von Smartcard-Betriebssystemen werden mehrere Applikationen gleichzeitig ausgeführt, die dabei asynchron auf vorhandene Speicherressourcen zugreifen. Darüber hinaus besteht hierbei die Notwendigkeit, Transaktionen zu verschachteln und die einzelnen Bestandteile der Applikationen feingranular absichern zu können. Dies ist beispielsweise im Smartcard-Betriebssystem Java Card 3.0 gefordert. Hierzu ist eine effiziente Speichernutzung und Ausführungsgeschwindigkeit erwünscht. Insbesondere sollen asynchrone, verschachtelte Transaktionen mit einer minimalen Anzahl von Schreibzyklen ausgeführt werden können.

In dem Artikel "Recoverable Persistent Memory of SmartCard" von Donesz et al wird eine Chipkarte beschrieben, welche einen Rückführpuffer mit einem Before-Image verwendet, um eine Absicherung von verschachtelten Transaktionen oder nebenläufig ausgeführten Prozessen zu erreichen.

US 2006/0036655 A1 verwendet Transaktionsnummern, um sogenannte Snapshots in einem Datenbankmanagementsystem zu verwalten.

Es ist daher Aufgabe der vorliegenden Erfindung, ein Verfahren und eine Vorrichtung zur Verarbeitung von mehreren Transaktionen anzugeben, welche ein definiertes Transaktionsverhalten, insbesondere bei der Ausführung asynchroner, verschachtelter Applikationen, in einem tragbaren Datenträger sicherstellen.

Diese Aufgaben werden gelöst durch ein Verfahren mit den Merkmalen des Patentanspruches 1 sowie einen tragbaren Datenträger mit den Merkmalen des Patentanspruches 12. Diese Aufgabe wird ferner gelöst durch ein Computerprogrammprodukt gemäß den Merkmalen des Patentanspruches 13.

Die Erfindung schafft ein Verfahren zur Verarbeitung von mehreren Transaktionen, insbesondere von asynchronen, verschachtelten Transaktionen und/ oder Transaktionen aus nebenläufig ausgeführten Prozessen, in einem tragbaren Datenträger, bei dem eine zweistufige Verwaltung der Transaktionen erfolgt, wobei in einer ersten Stufe für die Transaktionen eine Absicherung angefordert wird und in einer zweiten Stufe die Anforderungen unter Nutzung von Transaktions-Kennzeichnern, die einer jeweiligen Transaktion zugewiesen werden, verwaltet werden.

Die Erfindung schafft ferner einen tragbaren Datenträger, insbesondere eine Chipkarte oder ein Chipmodul, mit einem Prozessor und mindestens einem Speicher, wobei der Speicher Programmbefehle umfasst, die dazu eingerichtet sind, den Prozessor zur Ausführung eines Verfahrens nach einem der vorherigen Ansprüche zu veranlassen.

Die Erfindung ermöglicht bei der Verarbeitung mehrerer Applikationen die Minimierung von Schreibzyklen, insbesondere auf langsamen Speicherklassen, sowie einen sparsamen Umgang mit Speicherressourcen durch eine dynamische Nutzung. Die der Erfindung zu Grunde liegende Idee besteht darin, die Verwaltung der Transaktionen zweistufig auszuführen. Dabei nimmt ein erster Dienst in der ersten Stufe eine Zuordnung von Transaktionen zu jeweiligen Prozessen vor und veranlasst die notwendige Absicherung für deren Ausführung. In der zweiten Stufe wird die asynchrone Transaktionsanforderung entgegengenommen, wobei die Asynchronität über den Transaktions-Kennzeichner, der für jede Änderungsaufforderung durch den zugeordneten Prozess verwendet wird, abgearbeitet wird. Der Transaktions-Kennzeichner wird bei Start der neuen Transaktion nach außen, d.h. an die Applikation, gegeben und wird für jede Änderungsaufforderung benötigt. Die zweite Stufe dient hierbei als eine Art intelligenter Datenlogger. Im Gegensatz dazu stellt die erste Stufe eine Programmierschnittstelle, eine sog. Transaction Application Programmable Interface (API), zur Verfügung.

Zweckmäßigerweise wird durch den zweiten Dienst in der zweiten Stufe jeder neuen Transaktion ein Transaktions-Kennzeichner zugewiesen und in einem Transaktionsspeicher abgelegt. Es ist zweckmäßig, wenn zusätzlich zu dem Transaktions-Kennzeichner die zu einer Transaktion gehörigen Sicherungsdaten, insbesondere Änderungen, eine Prüfsumme und zumindest eine Statusinformation in dem Transaktionsspeicher abgespeichert werden. Die einzelnen, zu einer Transaktion gehörenden Änderungen können in einem vorgegebenen Datenformat, insbesondere in TLV-Form, mit der Prüfsumme in den dafür gültigen Speicherbereich eingespeichert werden. Die Prüfsumme soll zweckmäßigerweise hinreichend genau sein, damit auch nach einem sog. Card Tear während des Schreibens ein erfolgreich geschriebenes Datenobjekt von einem unvollständig geschriebenen Datenobjekt unterschieden werden kann.

Gemäß einer weiteren Ausgestaltung wird durch den zweiten Dienst eine Liste aller gültigen Transaktions-Kennzeichner verwaltet, die sicher in dem Transaktionsspeicher abgespeichert wird, wobei die jeweils aktuellste Liste als gültige Liste Verwendung findet. Die Liste kann z.B. durch eine doppelte Haltung mit einem Zeitstempel (englisch: time stamp) oder einem Zähler und der Prüfsumme sicher abgelegt werden. Die Prüfsumme ist hierbei für langsame Speicherklassen, wie z.B. EEPROM-Speicher, bei nicht-atomaren Schreibvorgängen vorgesehen. Die Prüfsumme kann bei Transaktionen, welche in einen volatilen Speicher schreiben, entfallen.

Insbesondere erfolgt beim Start einer Transaktion ein neuer Eintrag in die Liste der gültigen Transaktions-Kennzeichner und/oder es wird bei der Beendigung oder Suspendierung einer Transaktion der betreffende Eintrag aus der Liste entfernt. Hierdurch ergibt sich ein sparsamer Umgang mit den Speicherressourcen durch eine dynamische Nutzung.

Es ist weiterhin vorgesehen, dass durch den zweiten Dienst eine Defragmentierung eines Speicherbereichs der Liste für die Transaktionsänderungen erfolgt, wenn diese zu einem vorgegebenen Maß gefüllt ist, indem aus der Liste Einträge mit ungültigem Transaktions-Kennzeichner entfernt werden. Dies kann beispielsweise durch Neuanlegen eines weiteren Transaktions-Buffers, durch das Kopieren der gültigen Einträge und Freigeben des Speichers des ursprünglichen Transaktions-Buffers erfolgen.

Gemäß einer weiteren Ausgestaltung ist vorgesehen, dass durch den zweiten Dienst bei einer, insbesondere atomaren, Schreibanweisung überprüft wird, ob der Transaktions-Kennzeichner gültig ist, durch die Schreibanweisung zu verändernde Originaldaten in einem Rückführpuffer (englisch: rollback buffer) gespeichert werden und anschließend die gespeicherten Originaldaten verändert werden. Mit anderen Worten wird das sog. Before-Image zu der betreffenden Schreibanweisung in den dafür gültigen Speicher getragen und erst anschließend das Original geändert.

In einer weiteren Ausgestaltung des erfindungsgemäßen Verfahrens ist ein atomares Schreiben ohne Anlegen einer Transaktion durch die Vergabe eines speziellen Kennzeichners ermöglicht. Der Begriff "ohne Anlegen einer Transaktion" bedeutet hierbei, dass kein gültiger Transaktions-Kennzeichner in der Liste der Transaktions-Kennzeichner enthalten ist. Durch die Vergabe des speziellen Kennzeichners erfolgt eine Sonderbehandlung für atomare Schreibvorgänge, die losgelöst von einer geöffneten Transaktion erfolgen können.

Insbesondere erzeugt der erste Dienst für einen nativen Prozess einen wechselseitigen Ausschluss, eine sog. Mutual Exclusion (Mutex), wobei zusätzlich ein Transaktions-Kennzeichner abgespeichert wird. Ferner ist für die Speicherung verschachtelter Transaktions-Kennzeichner ein Transaktionsstapel vorgesehen, welcher über eine Programmierschnittstelle des ersten Dienstes zugreifbar ist. Hiermit ist eine komfortable Programmierschnittstelle (Transaction API) für verschachtelte Transaktionen zur Verfügung gestellt.

Insbesondere kann der erste Dienst durch eine virtuelle Maschine bereitgestellt sein. Dies ist insbesondere bei der Verwendung einer sog. multi-threaded virtuellen Maschine möglich. Dazu wird der Transaktions-Kennzeichner zu einem Satz von Kontrollvariablen hinzugefügt, wodurch dieser Bestandteil eines "aktuellen Kontexts" der virtuellen Maschine ist. Beispielsweise kann der Transaktions-Kennzeichner im sog. Stack-Frame jeder Methode für jeden Prozess bzw. Thread mit abgelegt werden.

In einer alternativen Ausgestaltung sind Variationen des beschriebenen Verfahrens denkbar, beispielsweise, dass nicht die Liste der aktuellen Transaktionen gespeichert wird, sondern ungültige Einträge in dem Transaktionsspeicher (Before-Image) sofort entfernt werden.

Von der Erfindung ist weiter ein Computerprogrammprodukt umfasst, das maschinenlesbare Programmbefehle für einen Prozessor eines tragbaren Datenträgers aufweist, die dazu eingerichtet sind, den Prozessor zur Ausführung eines oben beschriebenen Verfahrens zu veranlassen. Das Computerprogrammprodukt kann auf einem maschinenlesbaren Speicher, einer CD, einer Diskette und dergleichen, verkörpert sein. Das Computerprogrammprodukt kann ebenfalls in Form eines Signals oder einer Signalfolge, das über ein Netzwerk übertragen wird, verkörpert sein.

Die Erfindung wird nachfolgend näher anhand eines Ausführungsbeispiels in der Zeichnung erläutert. Es zeigen:
- Fig. 1: die prinzipielle Struktur eines in einem erfindungsgemäßen Verfahren verwendeten Datenobjekts,
- Fig. 2: eine in einem Transaktionsspeicher abgelegte Liste,
- Fig. 3: eine schematische Darstellung eines erfindungsgemäßen Transaktionsservices.

Die Erfindung stellt ein einfaches und effizientes Verfahren für asynchrone, verschachtelte Transaktionen bereit. Effizient bedeutet in diesem Zusammenhang die Minimierung von Schreibzyklen und den sparsamen Umgang mit Speicherressourcen durch dessen dynamische Nutzung.

Der prinzipielle Ablauf für eine einfache Transaktion umfasst die folgenden Schritte:
1. Es wird eine Kopie von in einem Transaktionsspeicher befindlichen Originaldaten erzeugt, welche als sog. Before-Image bezeichnet wird.
2. Ist sichergestellt, dass das Before-Image sicher abgelegt ist, wird dieses aktiviert.
3. Anschließend werden die Originaldaten in dem Transaktionsspeicher verändert.
4. Ist die Transaktion abgeschlossen, so wird das Before-Image verworfen. Wird die Transaktion hingegen abgebrochen, so wird das Before-Image auf die Originaldaten zurückkopiert und anschließend verworfen.

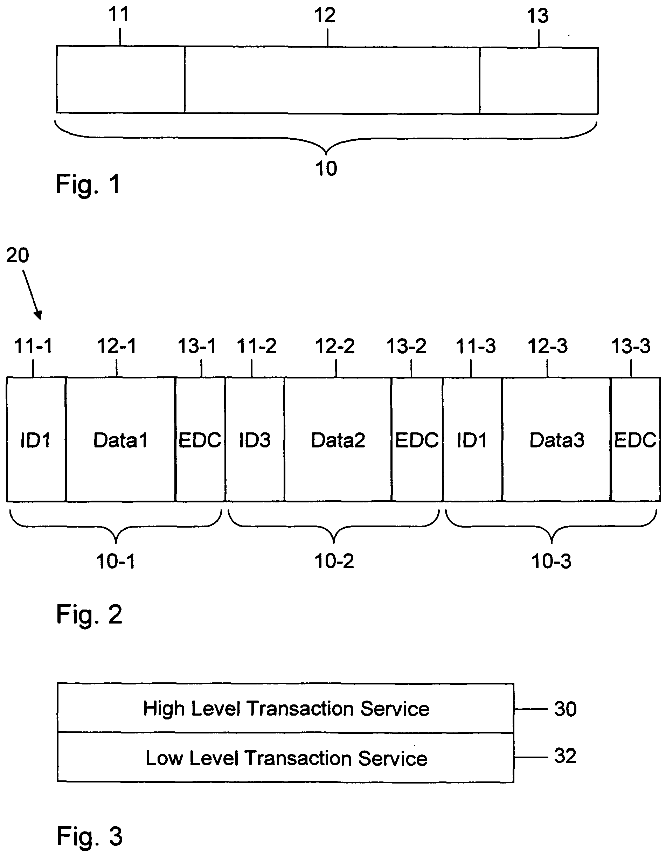

Bei einem Transaktionsservice ist somit die Verwaltung des Before-Images mit Ressourcenaufwand verbunden. Die Erfindung schlägt deshalb vor, den Transaktionsservice in zwei Teile aufzuspalten. Der erfindungsgemäße Transaktionsservice ist beispielhaft in Fig. 3 dargestellt. Dieser umfasst eine erste Stufe 30, welche als High-Level Transaction Service bezeichnet wird. Sie umfasst weitere eine zweite Stufe 32, welche einen Low-Level Transaction Service umfasst. Der Low-Level Transaction Service nimmt eine asynchrone Transaktionsanforderung durch einen Prozess entgegen. Dabei wird die Asynchronität nicht, wie üblich, durch eine sog. Mutex (Mutual Exclusion) mit einem Kennzeichner abgearbeitet, sondern der Low-Level Transaction Service erzeugt selbst einen Transaktionskennzeichner, den er beim Start einer neuen Transaktion an den Prozess nach außen gibt. Der einmal festgelegte und eindeutige Transaktions-Kennzeichner wird für jede Änderungsaufforderung benötigt. Hierbei fungiert der Low-Level Transaction Service als intelligenter Datenlogger, während der High-Level Transaction Service eine Programmierschnittstelle (Transaction API) zur Verfügung stellt.

Fig.1 zeigt die Struktur eines erfindungsgemäß verwendeten Datenobjektes 10 im Before-Image. Das Datenobjekt 10 umfasst im Wesentlichen drei Bestandteile: einen ersten Datenblock 11 mit dem Transaktions-Kennzeichner, einen zweiten Datenblock 12 mit Daten sowie einen dritten Datenblock 13 mit einer Prüfsumme sowie zumindest einer Statusinformation.

Die der Erfindung zu Grunde liegende Idee besteht darin, dass der Low-Level Transaction Service die einzelnen, zu einer Transaktion gehörenden Änderungen in einem vorgegebenen Datenformat, insbesondere in TLV-Form, mit der Prüfsumme, in einen dafür gültigen Speicherbereich des Transaktionsspeichers abspeichert. Die Prüfsumme ist für langsame Speicherklassen (beispielsweise EEPROM-Speicher) ohne atomares Schreiben zweckmäßig. Bei Transaktionen in einem alternativen Speicher kann die Prüfsumme in dem Datenobjekt entfallen. Die Prüfsumme soll hinreichend genau sein, damit nach einem Card Tear während des Schreibens eines Datenobjektes ein erfolgreich geschriebenes, aktives Datenobjekt von einem unvollständig geschriebenen Datenobjekt unterschieden werden kann.

Das Beschreiben des Transaktionsspeichers 20 ist exemplarisch in Fig. 2 dargestellt. In dieser Figur sind drei Datenobjekte 10-1,10-2 und 10-3 dargestellt. Jedes der Datenobjekte umfasst den ersten Datenblock 11-1,11-2,11-3 mit dem jeweiligen Transaktions-Kennzeichner ID1, ID3, ID1, den zweiten Datenblock 12-1,12-2,12-3 mit jeweiligen Daten Data1, Data2 bzw. Data3 sowie den dritten Datenblock 13-1,13-2,13-3 mit einer Prüfsumme EDC. In dem Transaktionsspeicher 20 kann eine Mehrzahl derartiger Datenobjekte 10 eingespeichert sein. Jedes Datenobjekt kann anhand seines Transaktions-Kennzeichners identifiziert werden.

Der Low-Level Transaction Service verwaltet eine Liste aller gültigen Transaktions-Kennzeichner, wobei die Liste in dem Transaktionsspeicher 20 in der in Fig. 2 gezeigten Form abgelegt ist. Die Liste kann beispielsweise durch doppelte Haltung mit einem Zeitstempel (Time Stamp) oder einem Zähler und der Prüfsumme sicher abgelegt werden, wobei die jeweils gültige, aktuellste Liste in dem Transaktionsspeicher 20 Verwendung findet.

Wird nun eine Transaktion gestartet, so erfolgt ein neuer Eintrag in der Liste der gültigen Transaktions-Kennzeichner. Wird eine Transaktion beendet (oder suspendiert) so wird der betreffende Eintrag, d.h. das betreffende Datenobjekt, entfernt. Ist der Speicherbereich des Transaktionsspeichers für Transaktionsänderungen gefüllt, so kann er durch Entfernen von Einträgen mit einem ungültigen Transaktions-Kennzeichner defragmentiert werden. Eine effiziente Möglichkeit besteht dazu im Neuanlegen eines weiteren Transaktions-Speichers, z.B. in einem dynamischen Speicher des tragbaren Datenträgers (nicht dargestellt), dem Codieren der gültigen Einträge und Freigeben des Speichers des ursprünglichen Transaktionsspeichers.

Wird eine atomare Schreibanweisung mit einem Transaktionskennzeichner durch den High-Level Transaction Service an den Low-Level Transaction Service übergeben, so überprüft letzterer, ob der Transaktions-Kennzeichner gültig ist. Ist dies der Fall, so trägt er das Before-Image zu dieser Schreibanweisung in einen dafür gültigen Speicher und verändert anschließend die Originaldaten. Es ist ebenso ein atomares Schreiben ohne zuvor geöffnete Transaktion, d.h. ohne gültigen Transaktions-Kennzeichner, möglich, indem ein gesonderter Kennzeichner für diese Sonderbehandlung vergeben wird.

Der High-Level Transaction Service stellt die Zuordnung von Transaktionen, zu jeweiligen Applikationen bzw. Prozessen sicher. Hierbei kann dieser für native Prozesse eine Mutex erzeugen, in der zusätzlich der Transaktions-Kennzeichner abgespeichert wird. Mit Hilfe eines Transaktions-Stacks, in dem verschachtelte Transaktions-Kennzeichner abgespeichert werden, wird eine komfortable Programmierschnittstelle für die verschachtelten Transaktionen zur Verfügung gestellt.

Die Aufgaben des High-Level Transaction Service können mit einer virtuellen Maschine übertragen werden. Dies gilt insbesondere bei Verwendung einer sog. multi-threaded virtuellen Maschine. Hierzu wird der Transaktions-Kennzeichner zum Satz von Kontrollvariablen hinzugefügt, so dass dieser zum aktuellen Kontext der virtuellen Maschine gehört. Beispielsweise kann der Transaktions-Kennzeichner im Stack-Frame jeder Methode für jeden Thread mit abgelegt werden.

Das erfindungsgemäße Verfahren lässt sich je nach Anforderung variieren. Insbesondere kann vorgesehen sein, dass nicht eine Liste der aktuellen Transaktionen geführt wird, sondern ungültige Einträge im Before-Image entfernt werden.

## Patentansprüche

1. Verfahren zur Verarbeitung von mehreren Transaktionen, von asynchronen, verschachtelten Transaktionen und/ oder Transaktionen aus nebenläufig ausgeführten Prozessen, in einem tragbaren Datenträger, bei dem eine zweistufige Verwaltung der Transaktionen, erfolgt, wobei in einer ersten Stufe (30) eine Zuordnung von Transaktionen zu jeweiligen Prozessen vorgenommen wird und für die Transaktionen eine Absicherung angefordert wird und wobei in einer zweiten Stufe (32) die angeforderten Absicherungen unter Nutzung von Transaktions-Kennzeichnern (11; 11-1,11-2,11-3), die einer jeweiligen Transaktion zugewiesen werden, verwaltet werden.

2. Verfahren nach Anspruch 1, bei dem der Transaktions-Kennzeichner (11; 11-1,11-2,11-3) für jede Änderungsaufforderung durch den zugeordneten Prozess verwendet wird.

3. Verfahren nach einem der vorherigen Ansprüche, bei dem durch einen zweiten Dienst in der zweiten Stufe (32) jeder neuen Transaktion ein Transaktions-Kennzeichner (11; 11-1,11-2,11-3) zugewiesen und in einem Transaktionsspeicher (20) abgespeichert wird.

4. Verfahren nach Anspruch 3, bei dem zusätzlich zu dem Transaktions-Kennzeichner (11; 11-1,11-2,11-3) die zu einer Transaktion gehörige Sicherungsdaten, insbesondere Änderungen, eine optionale Prüfsumme und zumindest eine Statusinformationen in dem Transaktionsspeicher (20) abgespeichert werden.

5. Verfahren nach Anspruch 3 oder 4, bei dem durch den zweiten Dienst eine Liste aller gültigen Transaktions-Kennzeichner (11;11-1,11-2, 11-3) verwaltet wird, die sicher in dem Transaktionsspeicher (20) abgespeichert wird, wobei die jeweils aktuellste Liste als gültige Liste Verwendung findet.

6. Verfahren nach Anspruch 5, bei dem beim Start einer Transaktion ein neuer Eintrag in die Liste der gültigen Transaktions-Kennzeichner (11; 11-1,11-2,11-3) erfolgt und/ oder bei dem bei der Beendigung oder Suspendierung einer Transaktion der betreffende Eintrag aus der Liste entfernt wird.

7. Verfahren nach Anspruch 6, bei dem durch den zweiten Dienst eine Defragmentierung eines Speicherbereichs der Liste für die Transaktionsänderungen erfolgt, wenn dieser zu einem vorgegebenen Maß gefüllt ist, indem aus der Liste Einträge mit ungültigem Transaktions-Kennzeichner (11; 11-1,11-2,11-3) entfernt werden.

8. Verfahren nach einem der Ansprüche 3 bis 7, bei dem durch den zweiten Dienst bei einer, insbesondere atomaren, Schreibanweisung überprüft wird, ob der Transaktions-Kennzeichner (11; 11-1,11-2,11-3) gültig ist, durch die Schreibanweisung eine Kopie der zu verändernden Originaldaten durch Speichern in einem Rückführpuffer erzeugt wird und anschließend die Originaldaten verändert werden.

9. Verfahren nach einem der vorherigen Ansprüche, bei dem ein atomares Schreiben ohne Anlegen einer Transaktion durch die Vergabe eines speziellen Kennzeichners ermöglicht ist.

10. Verfahren nach einem der Ansprüche 1 bis 9, bei dem für die Speicherung verschachtelter Transaktions-Kennzeichner (11; 11-1,11-2,11-3) ein Transaktionsstapel vorgesehen ist, welcher über eine Programmierschnittstelle des ersten Dienstes zugreifbar ist.

11. Verfahren nach einem der Ansprüche 1 bis 10, bei dem der erste Dienst durch eine Virtuelle Maschine bereitgestellt wird.

12. Tragbarer Datenträger, insbesondere Chipkarte oder Chipmodul, mit einem Prozessor und mindestens einem Speicher, wobei der Speicher Programmbefehle umfasst, die dazu eingerichtet sind, den Prozessor zur Ausführung eines Verfahrens nach einem der vorherigen Ansprüche zu veranlassen.

13. Computerprogrammprodukt, das maschinenlesbare Programmbefehle für einen Prozessor eines tragbaren Datenträgers aufweist, die dazu eingerichtet sind, den Prozessor zur Ausführung eines Verfahrens nach einem der Ansprüche 1 bis 11 zu veranlassen.

## Claims

1. A method for processing a plurality of transactions, of asynchronous, nested transactions and/or transactions from concurrently executed processes, in a portable data carrier, in which a two-stage management of transactions is effected, wherein in a first stage (30) an allocation is effected of transactions to respective processes and a validation is requested for the transactions, and wherein in a second stage (32) the requested validations are managed using transaction identifiers (11; 11-1, 11-2, 11-3) that are assigned to a respective transaction.

2. The method according to claim 1, wherein the transaction identifier (11; 11-1, 11-2, 11-3) is employed for each change request by the associated process.

3. The method according to any of the preceding claims, wherein, by a second service in the second stage (32), a transaction identifier (11; 11-1, 11-2, 11-3) is assigned to each new transaction and is stored in a transaction memory (20).

4. The method according to claim 3, wherein in addition to the transaction identifier (11; 11-1, 11-2, 11-3), the backup data belonging to a transaction, in particular changes, an optional checksum and at least one status information item, are stored in the transaction memory (20).

5. The method according to claim 3 or 4, wherein by the second service a list of all valid transaction identifiers (11; 11-1, 11-2, 11-3) is managed, which is securely stored in the transaction memory (20), wherein the respectively most up-to-date list is employed as valid list.

6. The method according to claim 5, wherein at the start of a transaction, a new entry is effected in the list of valid transaction identifiers (11; 11-1, 11-2, 11-3) and/or wherein upon conclusion or suspension of a transaction the corresponding entry is removed from the list.

7. The method according to claim 6, wherein by the second service a defragmentation of a memory area of the list of the transaction changes is effected when said memory area is filled to a predetermined level through removing entries with invalid transaction identifier (11; 11-1, 11-2, 11-3) from the list.

8. The method according to any of the claims 3 to 7, wherein by the second service it is checked in a write instruction, in particular an atomic one, whether the transaction identifier (11; 11-1, 11-2, 11-3) is valid, a copy of the original data to be changed is produced by the write instruction by storing in a return buffer and the original data are changed subsequently.

9. The method according to any of the preceding claims, wherein atomic writing is enabled without creating a transaction by awarding a special identifier.

10. The method according to any of the claims 1 to 9, wherein for storing nested transaction identifiers (11; 11-1, 11-2, 11-3) a transaction stack is provided which is accessible via an application programming interface of the first service.

11. The method according to any of the claims 1 to 10, wherein the first service is made available by a virtual machine.

12. A portable data carrier, in particular chip card or chip module, having a processor and at least one memory, wherein the memory includes program commands which are adapted to cause the processor to execute a method according to any of the preceding claims.

13. A computer program product having machine-readable program commands for a processor of a portable data carrier, which are adapted to cause the processor to execute a method according to any of the claims 1 to 11.

## Revendications

1. Procédé de traitement de plusieurs transactions, de transactions entrelacées asynchrones et/ou de transactions dues à des processus exécutés en même temps, dans un support de données portable dans lequel une gestion des transactions à deux niveaux a lieu, cependant que, à un premier niveau (30), une affectation de transactions à des processus respectifs est effectuée et que, pour les transactions, une sécurisation des transactions est demandée, et cependant que, à un deuxième niveau (32), les sécurisations demandées sont gérées par emploi d'identificateurs de transaction (11; 11-1, 11-2, 11-3) affectés à une transaction respective.

2. Procédé selon la revendication 1, dans lequel l'identificateur de transaction (11; 11-1, 11-2, 11-3) est utilisé pour chaque demande de modification par le processus affecté.

3. Procédé selon une des revendications précédentes, dans lequel, par un deuxième service, au deuxième niveau (32), un identificateur de transaction (11; 11-1, 11-2, 11-3) est attribué à chaque nouvelle transaction et mémorisé dans une mémoire de transactions (20).

4. Procédé selon la revendication 3, dans lequel, en plus de l'identificateur de transaction (11; 11-1, 11-2, 11-3), les données de sécurisation appartenant à une transaction, en particulier des modifications, une somme optionnelle de contrôle et au moins une information de statut sont mémorisées dans la mémoire de transactions (20).

5. Procédé selon la revendication 3 ou 4, dans lequel, par le deuxième service, une liste de tous les identificateurs valides de transaction (11; 11-1, 11-2, 11-3) est gérée, laquelle est mémorisée de manière sécurisée dans la mémoire de transactions (20), la liste respectivement la plus actuelle servant comme liste valide.

6. Procédé selon la revendication 5, dans lequel, lors du lancement d'une transaction, une nouvelle entrée dans la liste des identificateurs valides de transaction (11; 11-1, 11-2, 11-3) a lieu et/ou dans lequel, lors de l'achèvement ou de la suspension d'une transaction, l'entrée concernée est supprimée de la liste.

7. Procédé selon la revendication 6, dans lequel, par le deuxième service, une défragmentation d'une zone mémoire de la liste a lieu pour les modifications de transaction quand cette dernière est remplie à un degré prédéterminé, ce qui a lieu en ce que, de la liste, des entrées ayant des identificateurs non valides de transaction (11; 11-1, 11-2, 11-3) sont supprimées.

8. Procédé selon une des revendications de 3 à 7, dans lequel, par le deuxième service, il est vérifié lors d'une instruction d'écriture, en particulier atomique, si l'identificateur de transaction (11; 11-1, 11-2, 11-3) est valide, une copie des données d'origine à modifier est générée par l'instruction d'écriture par mémorisation dans un tampon de restauration, et les données d'origine sont ensuite modifiées.

9. Procédé selon une des revendications précédentes, dans lequel une écriture atomique est rendue possible sans création d'une transaction par l'octroi d'un identificateur spécial.

10. Procédé selon une des revendications de 1 à 9, dans lequel, pour la mémorisation d'identificateurs de transaction (11; 11-1, 11-2, 11-3) entrelacés, une pile de transactions accessible par l'intermédiaire d'une interface de programmation du premier service est prévue.

11. Procédé selon une des revendications de 1 à 10, dans lequel le premier service est mis à disposition par une machine virtuelle.

12. Support de données portable, en particulier carte à puce ou module puce, comportant un processeur et au moins une mémoire, la mémoire comprenant des ordres de programme configurés pour amener le processeur à exécuter un procédé selon une des revendications précédentes.

13. Produit programme d'ordinateur comportant des ordres de programme lisibles par machine qui sont destinés à un processeur d'un support de données portable et configurés pour amener le processeur à exécuter un procédé selon une des revendications de 1 à 11.
